# EUROPEAN PATENT APPLICATION

(11) **EP 4 459 390 A1**
(43) Date of publication of application: **06.11.2024**
(21) Application number: 24173416.9
(22) Date of filing: 30.04.2024
(51) Int. Cl.: G05B 15/02

(54) **ALARM FLOOD MANAGEMENT SYSTEM AND METHOD**

(30) Priority: 05.05.2023 US 202363464228 P
(71) Applicant: Delta Controls Inc., Surrey, British Columbia V3S 1C7 (CA)
(72) Inventor: Bursill, Jayson Frederick, Gloucester, Ontario, K1B 5B1 (CA); Mustapha, Gamal Kazim, Surrey, British Columbia, V4P 3G4 (CA); Kwong, Robert Christopher, Coquitlam, British Columbia, V3J 2P8 (CA)
(74) Representative: Uexküll & Stolberg

(57) **Abstract**

The present disclosure provides an alarm flood management system (1) including an extracting device (2), an aligning device (3), a clustering device (4), a pattern mining device (5), a controller (6), and a segmenting device (9). The extracting device (2) extracts alarm log data into alarm flood sequences. The aligning device (3) aligns the alarm flood sequences for obtaining the relationship between the alarm flood sequences. The clustering device (4) clusters the alarm flood sequences according to the relationship between the alarm flood sequences for obtaining groups of alarm flood sequences. The pattern mining device (5) performs pattern mining on the groups of alarm flood sequences for obtaining patterns of the alarm flood sequences. The controller (6) utilizes the patterns of the alarm flood sequences for providing a root-cause/strategy. The controller (6) suppresses the incoming alarm data by the predicted incoming alarm data and updates the root-cause/strategy according to the predicted incoming alarm data.

## Description

### FIELD OF THE INVENTION

The present disclosure relates to an alarm flood management system for building automation systems (BAS).

### BACKGROUND OF THE INVENTION

A Building automation system (BAS) includes heating, ventilation, and air conditioning (HVAC) controls, access controls, lighting controls, security system controls. Many of these systems adhere to the building automation and control networks (BACnet) standard, also known as American national standards institute (ANSI)/American society of heating, refrigerating, and air-condition engineers (ASHRAE) Standard 135, to facilitate vendor interoperability. The interoperable BAS facilitates monitoring performance of different systems in buildings and allows operators to better identify and mitigate system failures. The interoperable BAS also normalizes the data structure of alarms as a byproduct of the prescriptive requirements of the BACnet standard. BAS are designed to generate alarms when systems performance deviates from designed values as specified in a sequence of operations and implemented as per the BACnet standard. However, the number of alarms generated by the BAS may be extremely high within a short period of time (as defined by ANSI/ISA 18.2), resulting in an "alarm flood". The numerous alarm messages an operator receives during an alarm flood can be overwhelming and hamper regular and preventative maintenance efforts. Normally, the operator will even go as far as to ignore the BAS-generated alarms and default to another system that is unconnected to the BAS to manage their maintenance workflows.

Alarm floods can be categorized into two classes: (1) univariate nuisance alarms, of which chattering (poorly configured individual alarms) make up the majority; and (2) multivariate alarms, a combination of multiple consequence alarms.

For the univariate nuisance alarms, many techniques such as calculation of chattering index, delay timers, and deadbands are suggested by the Engineering Equipment and Materials Users Association (EEMUA) and the International Society of Automation (ISA) to quantify and reduce the chattering alarms. In general, univariate nuisance alarms and the accompanied chattering are a result of BACnet event object settings not being configured in a way that interfaces effectively with the monitored equipment as built. However, multivariate alarms are more complicated and difficult to handle due to the presence of interactions and sequences that are ubiquitous to multiple possibly-related events. These types of alarms are caused by abnormalities in the system. At the beginning a few alarms are generated and a cascade of alarms follows which can lead to alarm floods.

Therefore, there is a need for providing an alarm flood management system which provides actionable information for operators to improve the BAS alarming systems. The solution of the present disclosure differentiates itself from other alarm management approaches such as what is presented in ASHRAE Guideline 36 by using an enterprise-level approach and embedding machine learning to automate significant portions of the required programming and inference on ANSI/ASHRAE standard 135-compliant alarm data.

### SUMMARY OF THE INVENTION

It is an object of the present disclosure to provide an alarm flood management system and method. This disclosure discloses a process to predict the upcoming alarm floods, suppress the flood sequences, and provide root-cause/strategy information for the operator using ANSI/ASHRAE standard 135 event logs. These event logs include valuable information about each site's alarm history, and conformance to the standard is validated by external testing labs.

It is another object of the present disclosure to provide an alarm flood management system. This disclosure applies machine learning and pattern mining methods to implement a vendor-agnostic system for an alarm flood data analytics process using ANSI/ASHRAE standard 135 event logs as the data input. Using the system in this disclosure, operators are able to face fewer alarms and the predicted floods of consequential alarms can be suppressed.

In accordance with an aspect of the present disclosure, there is provided an alarm flood management system connected to a building automation system (BAS). The alarm flood management system includes an extracting device, an aligning device, a clustering device, a pattern mining device, a controller, and a segmenting device. The extracting device is configured to extract alarm log data into alarm flood sequences. The aligning device is configured to align the alarm flood sequences for obtaining the relationship between the alarm flood sequences. The clustering device is configured to cluster the alarm flood sequences according to the relationship between the alarm flood sequences for obtaining groups of alarm flood sequences. The pattern mining device is configured to perform pattern mining on each of the groups of alarm flood sequences for obtaining patterns of each of the alarm flood sequences. The controller is configured to utilizes the patterns of each of the alarm flood sequences for providing a root-cause/strategy. The segmenting device is configured to receive incoming alarm data generated from the BAS and to perform the segmentation to the incoming alarm data for obtaining online sequences. The aligning device utilizes the patterns of the alarm flood sequences to obtain the relationship between alarm flood sequences and the online sequences. The controller identifies whether the online sequences and the patterns of the alarm flood sequences are similar for predicting the incoming alarm data, the controller suppresses the incoming alarm data by the predicted incoming alarm data and updates the root-cause/strategy according to the predicted incoming alarm data.

In accordance with an aspect of the present disclosure, there is provided an alarm flood management method applicable for an alarm flood management system, including steps of: (a) extracting alarm log data into alarm flood sequences by the extracting device; (b) aligning the alarm flood sequences for obtaining the relationship between the alarm flood sequences by the aligning device; (c) clustering the alarm flood sequences according to the relationship between the alarm flood sequences for obtaining groups of alarm flood sequences by the clustering device; (d) performing pattern mining on each of the groups of alarm flood sequences for obtaining patterns of the alarm flood sequences by the pattern mining device; (e) receiving incoming alarm data and performing the segmentation to the incoming alarm data for obtaining online sequences by the segmenting device; (f) utilizing the patterns of the alarm flood sequences for obtaining the relationship between the alarm flood sequences and the online sequences by the aligning device; (g) determining whether the online sequences and the patterns of the alarm flood sequences are similar for predicting the incoming alarm data by the controller; (h) Suppressing the incoming alarm data by the predicted incoming alarm data; and (i) updating the root-cause/strategy according to the predicted incoming alarm data.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic diagram of an alarm flood management system according to an embodiment of the present disclosure;
FIG. 2 schematically shows embodiment of the sequential scoring progression of the aligning device 3 in FIG. 1 using a modified Needleman-Wunsch algorithm;
FIGs. 3 and 4 schematically show embodiments of the comparison of the positive similarity scores for two different dendrogram thresholds of the clustering device 4 in FIG. 1, wherein the dendrogram threshold of FIG. 3 equals to 1.0, and the dendrogram threshold of FIG. 4 equals to 0.85; and
FIG. 5 is a schematic flow chart illustrating an alarm flood management method according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

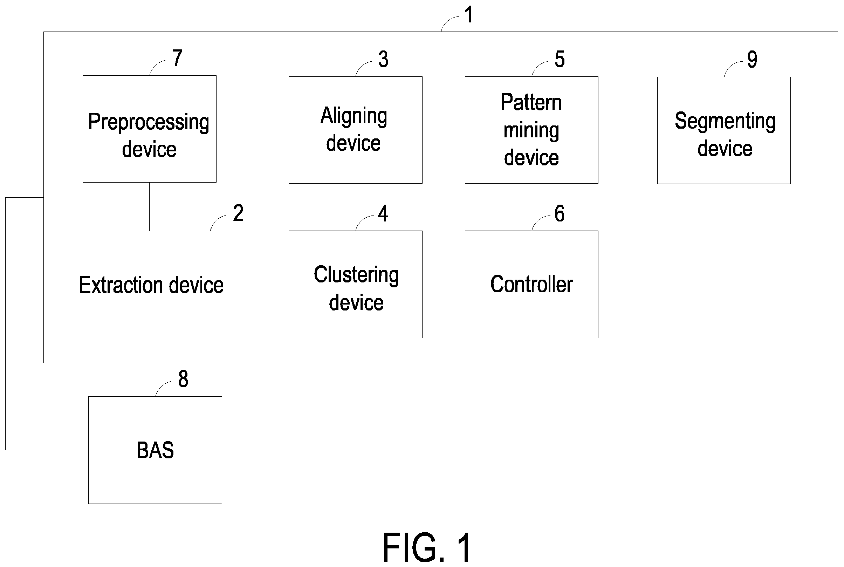

FIG. 1 is a schematic diagram of an alarm flood management system 1 according to an embodiment of the present disclosure. Please refer to FIG. 1, the alarm flood management system 1 includes an extracting device 2, an aligning device 3, a clustering device 4, a pattern mining device 5 and a controller 6 connected to each other. The alarm flood management 1 is connected to a BAS 8. The extracting device 2 extracts alarm log data into alarm flood sequences. The alarm log data is defined as data with alarm properties defined in ANSI/ASHRAE standard 135and includes the type of alarm, thresholds set by the system integrator, monitored objects and time of alarm, but not exclusively. In an embodiment, the alarm flood sequences are alarm sequences with more alarms than the thresholds defined by ANSI/ISA 18.2. ANSI/ISA 18.2 is a standard for the management of alarm systems for the process industries. The alarm log data is stored in the controller 6.

The aligning device 3 aligns the alarm flood sequences for obtaining the relationship between alarm flood sequences. The clustering device 4 clusters the alarm flood sequences according to the relationship between the alarm flood sequences for obtaining groups of alarm flood sequences. The pattern mining device 5 performs pattern mining on the groups of alarm flood sequences for obtaining patterns of the alarm flood sequences. The controller 6 utilizes the patterns of the alarm flood sequences for providing a root-cause/strategy. The root-cause/strategy is provided for the operator using ANSI/ASHRAE standard 135 event logs.

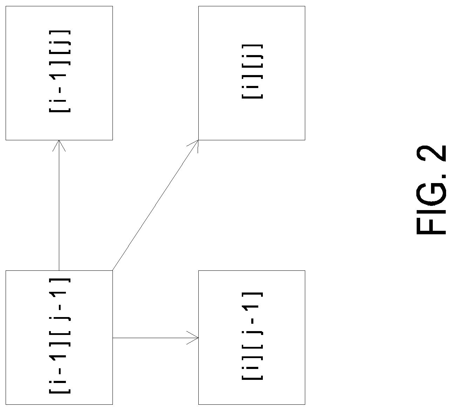

In an embodiment, the aligning device 3 aligns the alarm flood sequences for obtaining the relationship between alarm flood sequences by using a modified Needleman-Wunsch algorithm. The relationship between alarm flood sequences is for example but not limited to sequential scores, as shown in FIG. 2. The Needleman-Wunsch algorithm is a sequence grouping algorithm that evaluates relative similarity of different sequences in a manner that does not completely rely on the timing and order of the sequence steps. The Needleman-Wunsch algorithm breaks down a complex entire sequence, into smaller, manageable parts. By leveraging solutions to these smaller parts, the algorithm determines the optimal possible solution for the larger sequence. The algorithm evaluates various potential alignments, assigning each a score, and the algorithm's objective is to identify all alignments with the highest score.

In an embodiment, the pattern mining device 5 performs pattern mining on each of the groups of alarm flood sequences for obtaining patterns of each of the alarm flood sequences, and the controller utilizes the patterns of each of the alarm flood sequences for providing a root-cause/strategy.

In an embodiment, the clustering device 4 clusters the aligned alarm flood sequences for obtaining the groups of alarm flood sequences by using a clustering algorithm. In an embodiment, the clustering algorithm includes a user-defined nondimensional dendrogram threshold.

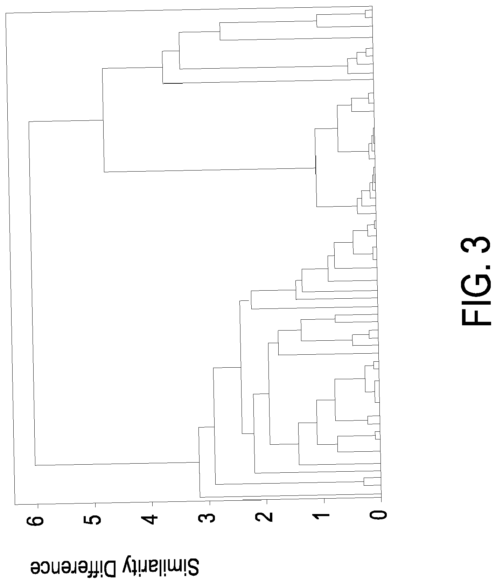

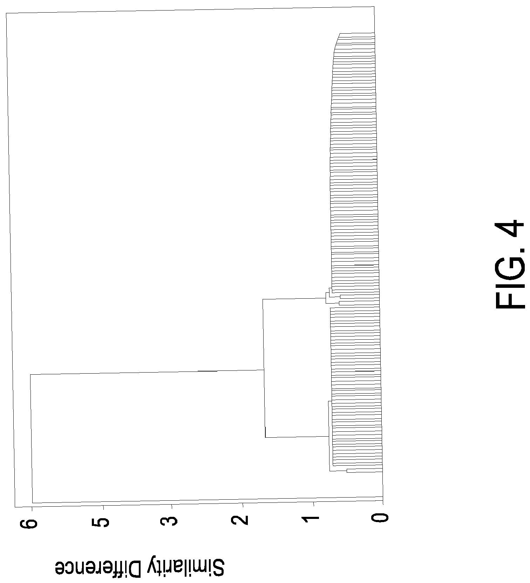

Regarding user-defined nondimensional dendrogram threshold, when creating the dendrograms, which are relational graph demonstrating the distinct root causes of the similar alarm flood sequences, and the threshold is a non-dimensional parameter. If the parameter were lowered, the number of distinct floods is increased, as shown in FIGs. 3 and 4. The dendrogram threshold has the inverse effect when increasing the threshold. The dendrogram threshold is a user-defined input to the alarm flood management system 1 that can be empirically adjusted to meet the operator's requirements.

In an embodiment, the alarm flood management system 1 further includes a preprocessing device 7 connected to the extracting device 2, the preprocessing device 7 preprocesses the alarm log data for removing chattering alarms of the alarm log data. The chattering alarms are nuisance alarms that consistently transition on and off at a high frequency. The extracting device 2 receives the preprocessed alarm log data and extracts the preprocessed alarm log data into alarm flood sequences.

The alarm flood management system 1 is connected to the BAS 8 for receiving incoming alarm data generated by the BAS constantly. In an embodiment, the alarm flood management system 1 further includes a segmenting device 9 connected to the extraction device 2, the aligning device 3, the clustering device 4, the pattern mining device 5, the controller 6 and the preprocessing device 7. The segmenting device 9 receives the incoming alarm data and performs the segmentation to the incoming alarm data for obtaining online sequences. The aligning device 3 utilizes the patterns of the alarm flood sequences to obtain the relationship between alarm flood sequences and the online sequences. The relationship between alarm flood sequences and the online sequences is for example but not limited to sequential scores.

The controller 6 utilizes the root-cause/strategy to identify whether the online sequences and the patterns of the alarm flood sequences are similar for predicting the incoming alarm data.

The controller 6 suppresses the incoming alarm data by the predicted incoming alarm data and updates the root-cause/strategy according to the predicted incoming alarm data.

In an embodiment, the incoming alarm data is preprocessed by the preprocessing device 7 for removing chattering alarms.

The alarm flood management system 1 utilizes back testing to fit and validate similarity indices for clusters of alarm flood sequences. The similarity indices are utilized to determine which clusters of alarm flood sequences are similar and have similar root causes. The root cause alarm is the alarm that originated the alarm flood sequences.

The alarm flood management system 1 allows the operator to prepare the system for alarm suppression by pre-training the alarm flood sequences using the alarm log data to rapidly identify learned alarm flood sequences regardless of the precise sequence or content of the alarms. This initial time investment by the operator will significantly reduce the filtering time requirement during the online process.

In the present disclosure, the alarm flood management system 1 applies the model fit trained by the alarm log data stored in the alarm flood management system 1 to infer alarm clusters and the root cause alarms. The alarm flood management system 1 utilizes updated root-cause/strategy to reduce alarm traffic to the operator.

The extracting device 2, the aligning device 3, the clustering device 4, the pattern mining device 5, the preprocessing device 7 and the segmenting device 9 may be circuits, computers, servers or algorithms.

In an embodiment, the operator can utilize the alarm flood management system 1 to either provide the inferred root cause of clusters of alarms or completely suppress the underlying alarms in the flood to only report the root cause alarms. Additionally, the root-cause/strategy utilizing constantly incoming alarm data can initially be used to validate the root-cause/strategy utilizing alarm log data. Actionable information in the form of root cause alarms is provided to the operator. In one embodiment, only the most useful actionable information would be provided for the operator to act on. The alarm flood data analytics process ensures that the operator receives precisely the most relevant and actionable information to act upon. Under normal operating conditions, it is likely that the root cause alarm rate can be maintained below the alarm flood levels specified in ANSI/ISA 18.2. If nuisance alarms continue in the absence of unique root cause alarms at a rate that maintains alarm flood levels under normal operating conditions, the root-cause/strategy utilizing alarm log data can be repeated to refine the pattern database. The root-cause/strategy utilizing alarm log data can be refined by operator input of additional root-case/strategy information to tag alarm flood patterns.

In an embodiment, the alarm flood management system 1 includes a supervisory device (not shown). A routing controller, an application controller, and a system controller are connected to the supervisory device. The root-cause/strategy analysis of the present disclosure is executed by the supervisory device utilizing alarm data from the application controller and the system controller sent via the routing controller. The routing controller receives the alarm data from the application controller and the system controller and transmits it to the supervisory device in the ANSI/ASHRAE standard 135protocol format to normalize the alarm data. The application controller and the system controller control real equipment for example but not limited to BAS 8 directly and communicate in any protocol that can be translated to and from ANSI/ASHRAE standard 135 by the routing controller.

In one embodiment, the alarm log data is extracted from the BAS 8 and ingested into a data analytics server. An alarm flood data analytics system of the data analytics server is configured to cluster flood sequences and extract a pattern from each cluster using a modified Needleman-Wunsch algorithm. Root-cause/strategies are identified for each cluster of alarm floods. Extracted patterns are used for online flood occurrence prediction, flood alarm suppression, and to provide the related root-cause/strategy information for the operator during the online flood occurrence.

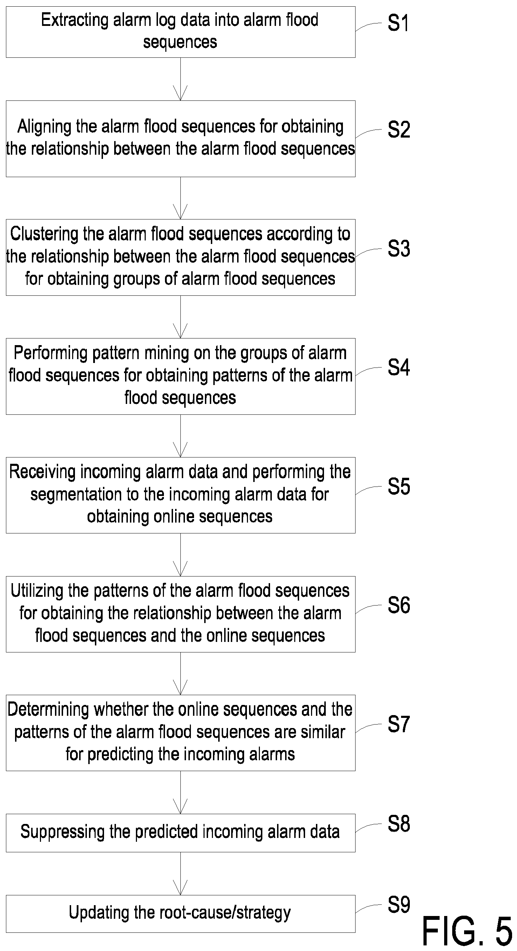

FIG. 5 is a schematic flow chart illustrating an alarm flood management method according to an embodiment of the present disclosure. The alarm flood management method of the present disclosure is applicable for the alarm flood management system 1 stated above but not limited to the alarm flood management system 1 mentioned above. Please refer to FIG. 5, the alarm flood management method of the present disclosure includes steps S1, S2, S3, S4, S5, S6, S7, S8, and S9. In the step S1, alarm log data is extracted to the alarm flood sequences by the extracting device 2. In the step S2, the alarm flood sequences are aligned for obtaining the relationship between the alarm flood sequences by the aligning device 3. In the step S3, the alarm flood sequences are clustered according to the relationship between the alarm flood sequences for obtaining groups of alarm flood sequences by the clustering device 4. In the step S4, pattern mining is performed on the groups of alarm flood sequences for obtaining patterns of the alarm flood sequences by the pattern mining device 5. The patterns of the alarm flood sequences is utilized to provide a root-cause/strategy by the controller 6. In an embodiment, the pattern mining in the step S4 is performed on each of the groups of alarm flood sequences for obtaining patterns of the alarm flood sequences by the pattern mining device 5. The patterns of each of the alarm flood sequences is utilized to generate the root-cause/strategy by the controller 6.

In the step S5, the incoming alarm data is received by the segmenting device 9, and the segmentation is performed to the incoming alarm data for obtaining online sequences by the segmenting device 9.

In the step S6, the patterns of the alarm flood sequences are utilized for obtaining the relationship between the alarm flood sequences and the online sequences by the aligning device 3.

In the step S7, whether the online sequences and the patterns of the alarm flood sequences are similar for predicting the incoming alarm data are determined by the controller 6.

In the step S8, the incoming alarm data is suppressed by the predicted incoming alarm data.

In the step S9, the root-cause/strategy is updated according to the predicted incoming alarm data.

From the above descriptions, the present disclosure provides a process to predict the upcoming alarm floods, suppress the flood sequences, and provide root-cause/strategy information for the operator using American national standards institute (ANSI)/ASHRAE standard 135 event logs. These event logs contain valuable information about each site's alarm history and conformance to the standard is validated by external testing labs.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An alarm flood management system (1) connected to a building automation system (BAS) (8), **characterized by** comprising:
an extracting device (2), configured to extract alarm log data into alarm flood sequences;
an aligning device (3), configured to align the alarm flood sequences for obtaining the relationship between the alarm flood sequences;
a clustering device (4), configured to cluster the alarm flood sequences according to the relationship between the alarm flood sequences for obtaining groups of alarm flood sequences;
a pattern mining device (5), configured to perform pattern mining on the groups of alarm flood sequences for obtaining patterns of the alarm flood sequences;
a controller (6), configured to utilizes the patterns of the alarm flood sequences for providing a root-cause/strategy; and
a segmenting device (9), configured to receive incoming alarm data generated from the BAS (8) and to perform the segmentation to the incoming alarm data for obtaining online sequences,
wherein the aligning device (3) is configured to utilize the patterns of the alarm flood sequences to obtain the relationship between alarm flood sequences and the online sequences,
wherein the controller (6) is configured to utilize the root-cause/strategy to identify whether the online sequences and the patterns of the alarm flood sequences are similar for predicting the incoming alarm data, the controller (6) is configured to suppress the incoming alarm data by the predicted incoming alarm data and update the root-cause/strategy according to the predicted incoming alarm data.

2. The alarm flood management system (1) according to claim 1, wherein the alarm log data is defined as data from the alarm properties defined in ANSI/ASHRAE standard 135.

3. The alarm flood management system (1) according to claim 1, wherein the alarm log data is stored in the controller (6).

4. The alarm flood management system (1) according to claim 1, wherein the root-cause/strategy is provided for the operator using ANSI/ASHRAE standard 135.

5. The alarm flood management system (1) according to claim 1, wherein the aligning device (3) aligns the alarm flood sequences for obtaining the relationship between alarm flood sequences by using a modified Needleman-Wunsch algorithm.

6. The alarm flood management system (1) according to claim 1, wherein the clustering device (4) is configured to cluster the aligned alarm flood sequences for obtaining the groups of alarm flood sequences by using a clustering algorithm.

7. The alarm flood management system (1) according to claim 6, wherein the clustering algorithm comprises a user-defined nondimensional dendrogram threshold.

8. The alarm flood management system (1) according to claim 1, further comprising a preprocessing device (7) connected to the extracting device (2), wherein the preprocessing device (7) preprocesses the alarm log data for removing chattering alarms of the alarm log data, the extracting device (2) receives the preprocessed alarm log data and extracts the preprocessed alarm log data into alarm flood sequences.

9. An alarm flood management method, applicable for an alarm flood management system (1), wherein the alarm flood management system is connected to a BAS (8) and comprises an extracting device (2), an aligning device (3), a clustering device (4), a pattern mining device (5), a controller (6), a segmenting device (9), and wherein the flood management method is **characterized by** comprising:
(a) extracting alarm log data into alarm flood sequences by the extracting device (2);
(b) aligning the alarm flood sequences for obtaining the relationship between the alarm flood sequences by the aligning device (3);
(c) clustering the alarm flood sequences according to the relationship between the alarm flood sequences for obtaining groups of alarm flood sequences by the clustering device (4);
(d) performing pattern mining on the groups of alarm flood sequences for obtaining patterns of the alarm flood sequences by the pattern mining device (5);
(e) receiving incoming alarm data and performing the segmentation to the incoming alarm data for obtaining online sequences by the segmenting device (9);
(f) utilizing the patterns of the alarm flood sequences for obtaining the relationship between the alarm flood sequences and the online sequences by the aligning device (3);
(g) determining whether the online sequences and the patterns of the alarm flood sequences are similar for predicting the incoming alarm data by the controller (6);
(h) suppressing the incoming alarm data by the predicted incoming alarm data; and
(i) updating the root-cause/strategy according to the predicted incoming alarm data.

10. The alarm flood management method according to claim 9, wherein the alarm log data is defined as data from the alarm properties defined in ANSI/ASHRAE standard 135.

11. The alarm flood management method according to claim 9, wherein the alarm log data is stored in the controller (6).

12. The alarm flood management method according to claim 9, wherein the root-cause/strategy is provided for the operator using ANSI/ASHRAE standard 135.

13. The alarm flood management method according to claim 9, wherein the aligning device (3) aligns the alarm flood sequences for obtaining the relationship between alarm flood sequences by using a modified Needleman-Wunsch algorithm.

14. The alarm flood management method according to claim 9, wherein the clustering device (4) clusters the aligned alarm flood sequences for obtaining the groups of alarm flood sequences by using a clustering algorithm.

15. The alarm flood management method according to claim 14, wherein the clustering algorithm includes a user-defined nondimensional dendrogram threshold.

16. The alarm flood management method according to claim 9, wherein the alarm flood management system further comprises a preprocessing device (7) connected to the extracting device (2), wherein the preprocessing device (7) preprocesses the alarm log data for removing chattering alarms of the alarm log data, the extracting device (2) receives the preprocessed alarm log data and extracts the preprocessed alarm log data into alarm flood sequences.
